# EUROPEAN PATENT APPLICATION

(11) **EP 1 300 352 A2**
(43) Date of publication of application: **09.04.2003**
(21) Application number: 02022471.3
(22) Date of filing: 04.10.2002
(51) Int. Cl.: B65G 49/06

(54) **Method and device for picking up superimposed sheets of glass**

(30) Priority: 05.10.2001 IT TO20010944
(71) Applicant: BOTTERO S.p.A., 12010 Cuneo (IT)
(72) Inventor: Ghinamo, Paolo, 12012 Boves (IT); Giorsetti, Roberto, 12016 Peveragno (IT)
(74) Representative: Cerbaro, Elena, Dr.

(57) **Abstract**

A method and assembly for picking up sheets (2) of glass from a pack (3) of superimposed sheets at a storage station (4), whereby the first sheet (2a) in the pack (3) is engaged by a gripping and retaining device (9) and removed from the storage station (4); withdrawal of the first sheet (2a) being performed by performing a first test movement of the gripping and retaining device (9), by determining, as a result of the test movement, a characteristic (P;S;G) of the sheet material (2a; 24) moved during the test movement, by comparing the determined characteristic (P;S;G) with a corresponding reference characteristic relative to the first sheet (2a), and by commanding movement of the gripping and retaining device (9) as a function of the comparison.

## Description

The present invention relates to a method of picking up superimposed sheets of glass.

More specifically, the present invention relates to a method of successively picking up sheets of glass from a pack of superimposed sheets.

Superimposed sheets of glass are normally picked up using suction-cup-type gripping assemblies, which successively engage the pickup sheets and are operated by an actuating member which, depending on the application, is defined by the output arm of a floor-operated pickup and handling machine, or by the movable member of an overhead conveyor.

Regardless of the type of actuating member employed, the sheets are picked up successively by moving the gripping assembly over to the sheet storage area, attaching the suction cups of the gripping assembly to the first sheet in the pack, and withdrawing the gripping assembly, and therefore the gripped sheet, from the pack.

Because of the suction effect produced between the pickup sheet and the adjacent sheets and/or the presence of gummed elements used previously to bind the pack, removing only the gripped sheet, particularly in the case of very large, thin sheets, poses problems in the sense that, in addition to the sheet engaged by the suction cups, one or more adjacent sheets are often also removed involuntarily. During transfer, the clinging sheets not retained by the suction cups eventually work loose unpredictably and shatter, thus endangering workers in the pickup area and along the transfer path, and resulting not only in considerable semifinished wastage, but also in reduced output in the event the sheets being parted for further processing.

Moreover, as the unwanted sheets work loose, the sheet retained by the suction cups is subjected to forces which often result in its own breakage, thus further increasing losses in terms of production and semifinished wastage.

To eliminate the above drawbacks, powder is applied between adjacent sheets, the nonstick effect of which, however, is seriously impaired by humidity. Alternatively, the gripping assembly is moved along given trajectories designed to slide the sheets with respect to each other and gradually flex the sheet retained by the suction cups. In this case, however, results are invariably poor, owing to the relative sliding movement scoring the sheets, and flexing of the retained sheet often resulting in it breaking.

It is an object of the present invention to provide a method of picking up superimposed sheets, designed to provide a straightforward, low-cost solution to the above problems.

According to the present invention, there is provided a method of picking up sheets of glass from a pack of superimposed sheets at a storage station, the method comprising the steps of applying sheet gripping and retaining means to the first sheet in the pack of sheets, and withdrawing said first sheet from said storage station; characterized in that withdrawal of said first sheet comprises the steps of performing, at said storage station, a first test movement of said gripping and retaining means; determining, as a result of said first test movement, a characteristic of the sheet material moved during said first test movement; comparing the determined said characteristic with a corresponding reference characteristic relative to said first sheet; and commanding movement of said gripping and retaining means as a function of the comparison.

The present invention also relates to a gripping assembly for picking up sheets of glass.

According to the present invention, there is provided a gripping assembly for picking up sheets of glass from a pack of superimposed sheets at a storage station, the assembly comprising sheet gripping and retaining means for engaging, each time, the first sheet in the pack of sheets; and actuating means for moving said gripping and retaining means to and from said storage station to withdraw said first sheet from said storage station; characterized by comprising detecting means for determining a characteristic of the sheet material moved as a result of a first movement of said gripping and retaining means from said storage station; and control means for controlling said actuating means as a function of a comparison between the determined said characteristic and a corresponding reference characteristic relative to said first sheet.

A non-limiting embodiment of the invention will be described by way of example with reference to the accompanying drawings, in which:
Figure 1 shows a schematic side view of a preferred embodiment of an assembly for picking up and transferring sheets of glass;
Figure 2 is similar to, and shows a variation of a detail in, Figure 1;
Figure 3 shows a larger-scale detail of Figure 2 in a different operating condition.

Number 1 in the accompanying drawings indicates as a whole a gripping assembly for successively picking up sheets 2 of glass from a pack 3 of superimposed sheets of glass located on a supporting frame 5 at a pickup station 4, and for transferring the picked-up sheets 2 to a follow-up work station not shown.

Assembly 1 comprises a known suction-cup gripping device 7 in turn comprising a frame 8 adaptable to the shape and size of sheets 2 for transfer, and a number of suction cups 9 arranged along frame 8 and for engaging and retaining, each time, the first sheet 2a in pack 3.

In the particular example described, frame 8 comprises an end or connecting portion 11 connected to an actuating member 12 activated by a powered unit 13 (shown schematically) which forms part of assembly 1 and may be an overhead type, such as a bridge crane, or a floor-operated type, such as a lift truck.

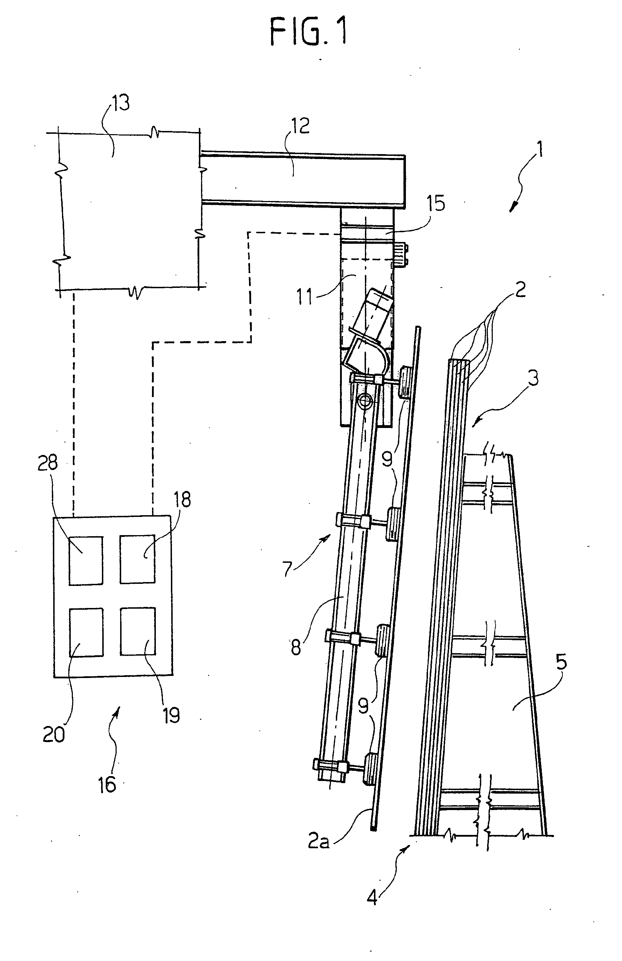

As shown in Figure 1, between end portion 11 and member 12 is interposed a picked-up sheet weighing device 15, conveniently a load-cell device, such as the APC traction type mod. TRX marketed by PAVONE SISTEMI S.R.L..

With reference to Figure 1, unit 13 and the whole of assembly 1 are controlled by a control unit 16 to which weighing device 15 is connected electrically. More specifically, unit 16 comprises a memory block 18 storing the weight of each sheet 2; and a processing block 19 which dialogs with memory block 18 and weighing device 15, determines the difference between a value determined by device 15 and the memorized value, and supplies a corresponding signal to a comparing block 20 which, in turn, emits a control signal in response to a comparison of the received signal and a given threshold value also stored in memory block 18.

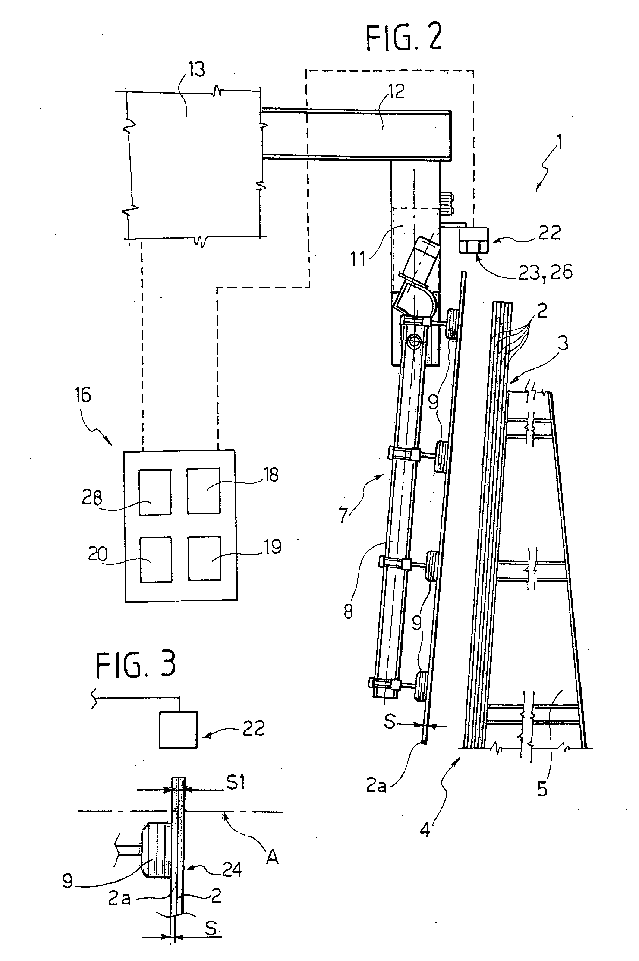

In the Figure 2 variation, assembly 1 has no weighing device 15, and instead comprises an optical detecting device 22 (shown schematically) which, in the example described, is an optical-fibre -type, and is fitted to frame 8, over the sheet 2a retained by suction cups 9.

In a first preferred embodiment, optical detecting device 22 comprises an optical-fibre sensor 23 for detecting both the thickness S of sheet 2a retained by suction cups 9, and the thickness S1 of a group 24 of sheets (Figure 3) comprising, in addition to sheet 2a retained by suction cups 9, also one or more adjacent sheets 2 attached to sheet 2a and picked up involuntarily. Both thicknesses S and S1 are determined in a common direction A, preferably perpendicular to sheet 2a retained by suction cups 9.

Optical detecting device 22 is connected to unit 16, the memory block 18 of which, in this case, stores thickness S of sheet 2, and the processing block 19 of which is connected to optical device 22 to determine the difference between the stored thickness value and the thickness value received from optical device 22, and supplies a corresponding signal to comparing block 20 which, as in the weight embodiment, compares the received signal with a given threshold value also stored in memory block 18, and supplies a corresponding control signal to unit 13.

In an alternative embodiment, optical detecting device 22 comprises, instead of or alongside sensor 23, a television camera 26 for determining the lateral outline G of both sheet 2a retained by suction cups 9, and of group 24 of sheets. In which case, memory block 18 of unit 16 stores the lateral outline of each sheet 2, processing block 19 emits a signal proportional to the difference between the stored outline and the outline received from camera 26, and comparing block 20 compares the difference with a threshold outline also stored in memory block 18.

Operation of assembly 1 will now be described as of the condition in which station 4 contains a pack 3 of sheets 2 all of the same shape and size; assembly 1 is in a rest position with no sheet 2 retained by suction cups 9; assembly 1 comprises weighing device 15; and memory block 18 stores the weight of each sheet 2.

As of the above condition, device 7 is moved over to station 4 by unit 13, and suction cups 9 engage the first sheet 2a in pack 3. At this point, unit 13 and assembly 1 are commanded to perform a first test movement of gripping device 7, after which, weighing device 15 determines the weight P of the sheet material picked up, which may comprise only the first sheet 2a retained by suction cups 9, or first sheet 2a plus additional sheets 2 attached to one another and to first sheet 2a. At this point, the detected weight is compared with the stored weight, and, if the difference is less than or equal to a given threshold value, i.e. if assembly 1 has only picked up first sheet 2a, comparing block 20 emits a consent signal, and the picked-up sheet 2a is removed from station 4. Conversely, if the difference between the detected value and the stored value is greater than the stored threshold value, i.e. one or more adjacent sheets 2 have been picked up from pack 3 together with first sheet 2a, comparing block 20 emits a disabling signal, and unit 16 prevents any further movement of unit 13 and device 7. At this point, the additional sheets 2 are detached from first sheet 2a, and, once this is done, a consent signal is sent to unit 16 either manually or directly by a sheet separating device (not shown), normally a pneumatic device, and sheet 2a is removed from station 4.

Since, in most cases, the sheets 2 attached to first sheet 2a are detached after the first test movement with no external intervention required, the disabling signal emitted by block 20 activates a timing block 28 of unit 16, which, after a given settable time lapse, reactivates the weighing and control procedure described above. If, after repeating the procedure, the weight difference is still greater than the threshold value, this means the sheets 2 in addition to first sheet 2a are still in the first weighing condition, so external intervention is activated to separate the sheets. Conversely, if the weight difference is below the given threshold, this means suction cups 9 at this point only retain first sheet 2a, which is therefore removed from station 4.

The above steps are also performed in the embodiments in which weighing device 15 is replaced with a thickness measuring device 22,23 or a profile detecting device 22,26, the only difference being in the characteristics considered, which are the thickness S of the sheet or group of sheets in the first case, and outline G in the second.

Assembly 1 therefore provides for ensuring only one sheet 2 is picked up at each pickup operation, thus solving all the problems posed by simultaneous pickup of two or more sheets 2, only one of which is retained firmly by suction-cup gripping device 7, while the others are free to move with respect to the firmly retained sheet at any time during transfer. More specifically, transferring at all times only one sheet firmly retained by suction cups 9 makes for an extremely safe working environment, safeguards the retained sheet, and reduces cost in terms of both low output and material wastage, resulting from inevitable breakage of the unretained sheets:

Clearly, changes may be made to assembly 1 as described herein without, however, departing from the scope of the present invention. In particular, both gripping device 7 and unit 13 may be other than as described herein by way of example. Moreover, weighing device 15 and dimensional and geometric detecting device 22 described herein by way of example may be replaced with other detecting devices, e.g. reflection and/or light-permeable devices, but all for determining a characteristic of the sheet material, and comparing the characteristic with a corresponding reference characteristic. The comparison may also be made by a machine operator, who then decides whether to transfer sheet 2 or disable unit 13.

## Claims

1. A method of picking up sheets (2) of glass from a pack (3) of superimposed sheets at a storage station (4), the method comprising the steps of applying sheet gripping and retaining means (9) to the first sheet (2a) in the pack (3) of sheets, and withdrawing said first sheet (2a) from said storage station (4); **characterized in that** withdrawal of said first sheet (2a) comprises the steps of performing, at said storage station (4), a first test movement of said gripping and retaining means (9); determining, as a result of said first test movement, a characteristic (P;S;G) of the sheet material (2a)(2a,24) moved during said first test movement; comparing the determined said characteristic (P;S;G) with a corresponding reference characteristic relative to said first sheet (2a); and commanding movement of said gripping and retaining means (9) as a function of the comparison.

2. A method as claimed in Claim 1, **characterized in that** commanding said gripping and retaining means (9) comprises the step of disabling further movement of said gripping and retaining means (9) in the event the difference between the determined characteristic and the reference characteristic exceeds a given threshold.

3. A method as claimed in Claim 1 or 2, **characterized in that** determining said characteristic comprises the step of determining the total weight (P) of the sheet material (2a)(2a,24) moved by said gripping and retaining means (9) in the course of said first test movement; and **in that** said comparison is made with the weight of said first sheet (2a) of glass.

4. A method as claimed in Claim 1 or 2, **characterized in that** determining said characteristic comprises the step of determining the thickness (S) of said sheet material in a measuring direction (A); and **in that** said comparison is made with the thickness of said first sheet (2a) of glass measured in the same measuring direction (A) .

5. A method as claimed in Claim 1 or 2, **characterized in that** determining said characteristic comprises the step of determining a lateral outline (G) of said sheet material; and **in that** said comparison is made with the corresponding lateral outline of said first sheet (2a) of glass.

6. A method as claimed in any one of the foregoing Claims, **characterized in that** the comparison between said determined characteristic and said reference characteristic is made by storing the reference characteristic in a memory block (18).

7. A method as claimed in any one of Claims 2 to 6, **characterized in that**, following disabling of the movement of said gripping and retaining means (9), and after a given time period, the characteristic of the sheet material moved in the course of said first test movement is again determined, and the same determined characteristic is again compared with the corresponding reference characteristic relative to said first sheet (2a).

8. A method as claimed in any one of Claims 2 to 7, **characterized in that**, after said disabling step, said first sheet (2a) is separated from the adjacent sheet (2) of glass.

9. A gripping assembly (1) for picking up sheets (2) of glass from a pack (3) of superimposed sheets at a storage station (4), the assembly (1) comprising sheet gripping and retaining means (9) for engaging, each time, the first sheet (2a) in the pack (3) of sheets; and actuating means (12, 13) for moving said gripping and retaining means (9) to and from said storage station (4) to withdraw said first sheet (2a) from said storage station (4); **characterized by** comprising detecting means (15; 22) for determining a characteristic (P;S;G) of the sheet material (2a)(2a,24) moved as a result of a first movement of said gripping and retaining means (9) from said storage station (4); and control means (16) for controlling said actuating means (12, 13) as a function of a comparison between the determined said characteristic and a corresponding reference characteristic relative to said first sheet (2a).

10. An assembly as claimed in Claim 9, **characterized by** comprising memory means (18) for storing said reference characteristic; and comparing means (20) for comparing said determined characteristic with the stored said reference characteristic, and for emitting a relative response signal.

11. An assembly as claimed in Claim 10, **characterized in that** said control means receive said response signal, and comprise disabling means (20) for disabling further movement of said actuating means (12, 13) when the difference between the determined characteristic and the stored reference characteristic exceeds a given threshold.

12. An assembly as claimed in Claim 10 or 11, **characterized in that** said detecting means comprise weighing means (15) for determining the weight (P) of said sheet material (2a)(2a,24); the weight of said first sheet (2a) being stored in said memory means (18).

13. An assembly as claimed in Claim 12, **characterized in that** said weighing means (15) comprise at least one load-cell device.

14. An assembly as claimed in Claim 10 or 11, **characterized in that** said detecting means comprise optical detecting means (22).

15. An assembly as claimed in Claim 14, **characterized in that** said optical detecting means are optical-fibre detecting means.

16. An assembly as claimed in Claim 12 or 13, **characterized in that** said optical detecting means are dimensional optical detecting means (22, 23) for determining the thickness (S) of said sheet material (2a)(2a,24) in a measuring direction (A); the thickness (S) of said first sheet (2a) measured in said measuring direction (A) being stored in said memory means (18).

17. An assembly as claimed in Claim 14 or 15, **characterized in that** said optical detecting means are geometric optical detecting means (26) for determining the lateral outline (G) of said sheet material (2a)(2a,24); the corresponding lateral outline of said first sheet (2a) being stored in said memory means (18).

18. An assembly as claimed in Claim 10, **characterized in that** said control means comprise adjustable timing means (28) for receiving said response signal and emitting a reactivating signal to reactivate said detecting means (15; 22).
